# EUROPEAN PATENT SPECIFICATION

(11) **EP 2 656 679 B1**
(45) Date of publication and mention of the grant of the patent: **23.11.2016**
(21) Application number: 10809098.6
(22) Date of filing: 20.12.2010
(51) Int. Cl.: H04W 56/00

(54) **METHODS AND USER EQUIPMENTS FOR PROVIDING INFORMATION ABOUT A CONNECTION STATE**
VERFAHREN UND BENUTZERGERÄTE ZUM BEREITSTELLEN EINER INFORMATION ÜBER EINEN VERBINDUNGSSTATUS
PROCÉDÉS ET ÉQUIPEMENTS UTILISATEUR POUR FOURNIR DES INFORMATIONS CONCERNANT UN ÉTAT DE CONNEXION

(43) Date of publication of application: 30.10.2013
(73) Proprietor: Telefonaktiebolaget LM Ericsson (publ), 164 83 Stockholm (SE)
(72) Inventor: MILDH, Gunnar, S-191 62 Sollentuna (SE); FODOR, Gabor, S-165 52 Hässelby (SE); HEDBERG, Tomas, S-112 69 Stockholm (SE); VIKBERG, Jari, S-153 38 Järna (SE)
(74) Representative: Ericsson
(86) International application number: PCT/SE2010/051429
(87) International publication number: WO 2012/087190

(56) References cited:
- WO-A1-00/59138
- WO-A1-02/13419
- FR-A1- 2 868 223
- US-A1- 2009 046 683

## Description

### TECHNICAL FIELD

The present disclosure relates to telecommunications, in particular to device-to-device communication within a telecommunication system. More particularly, the present disclosure relates to a method and a first user equipment for providing information about at least one of a first and a second connection state and to a method and a second user equipment for obtaining information about at least one of the first and second connection states.

### BACKGROUND

Within the field of telecommunications, so called device-to-device (D2D) communication has been promoted as a means to provide peer-to-peer services between user equipments (UEs). By means of D2D communication, capacity of a radio communication network may be enhanced since traffic between user equipments need not pass through the radio communication network. As a result, the radio communication network may be offloaded in terms of traffic between user equipments. Moreover, D2D communication enables infrastructure-less communication between user equipments. This may be of importance in, for example, emergency, national security and public safety situations, since during these situations load on the radio communication network may become very high. Furthermore, an emergency situation may for example occur where only limited coverage by the radio communication system is provided. In such situation, D2D communication may improve coverage by allowing a first user equipment (UE) to connect to the radio communication network via a second user equipment. In addition, local communication between user equipments using D2D communication will be possible without a need for coverage by the radio communication system.

It has been proposed to adopt the Bluetooth master-slave concept in order to implement D2D communication for user equipments in Long Term Evolution (LTE) systems. Below a known LTE system is described in order to provide background information in view of the proposal of adopting the Bluetooth master-slave concept for use in LTE systems. WO 00/59138 discloses a method for providing communications link between two user equipments that involves establishing a direct communication link between said user equipments. WO 00/59138 identifies the need for a user equipment to be able to determine the exact connection state of the counterpart user equipment. In order to do so the user equipment need an exhaustive examination of all available channels.

A known LTE system comprises a base station, such as an eNodeB (eNB), a micro base station, a femto base station or the like. Moreover, the LTE system comprises a user equipment. Before the user equipment can transmit/receive information to/from the base station, the following is performed.

In a first step, the user equipment searches and selects a serving cell of the base station. This is commonly referred to as cell search and selection. In this manner, the user equipment synchronizes both in time and frequency to a primary and a secondary synchronization signal (PSS/SSS) that are broadcast by the base station. The primary and secondary synchronization signals together encode information about cells of the base station. For example, information about physical layer cell identity (PHY Cell ID or "PCI" or "PID" for short) composed by the physical layer cell identity group (0...167) and the physical layer identity (0, 1 or 2) is encoded into the primary and secondary synchronization signals (PSS and SSS). The PSS and SSS are constructed such that the UE can find and lock onto these signals on, for example power up of the UE. Thereafter, the UE can decode the PCI.

In a second step, the UE decodes the physical broadcast channel (PBCH) and reads a master information block (MIB). The master information block includes system information, such as the system bandwidth and/or the number of transmit antennas at the base station. The UE needs to be aware of the system information in order to be able to communicate with the LTE network. Once the UE has decoded the MIB, the UE decodes the system information blocks (SIBs) transmitted on a downlink shared channel (DL-SCH) from the base station. There are multiple system information blocks ranging from 1 and upwards. Out of the system information blocks, SIB1 and SIB2 are essential for accessing the system, i.e. begin an uplink (UL) transmission. The system information blocks SIB1 and SIB2 contain information about the configuration of the radio channels of the serving cell, e.g. PHY UL control channel (PUCCH) and random access channel (RACH) as well as cell barring information.

In a third step, the user equipment performs a random access (RA) procedure by using information acquired from the MIB and the SIBs. In this manner, the UE obtains uplink synchronization and an initial grant to uplink transmission resources. During the random access procedure, the base station sends a RA Response to the UE. The RA response includes, for example, a time alignment instruction and an initial PHY uplink shared channel (PUSCH) resource grant that together allow the UE to transmit uplink data and/or signaling information. As a result, the UE and the base station are able to communicate with each other by dedicated signaling over the downlink shared channel (DL-SCH). The downlink shared channel is used to setup a Radio Resource Control (RRC) Connection between the user equipment and the base station. The RRC Connection is kept as long as the UE is active in the cell, i.e. the UE is in a RRC Connected mode. Now, the user equipment is connected to the base station and may transmit/receive information. There are only two possible states for an RRC Connection, one is the aforementioned RRC Connected mode and the other state is RRC Idle mode.

Now, returning to the proposal of adapting the Bluetooth master-slave concept for use in the LTE network to enable D2D communication. A first UE takes a master role, referred to as "a master UE" herein, and (closely) emulates an LTE base station. The master UE provides the synchronization signals PSS and SSS, as well as the essential system information (MIB and some of the SIBs such as SIB1/2). Moreover, the master UE also implements the standard RA procedure allowing for a similar initial access procedure for a second UE, referred to as "a slave UE" herein, as for the LTE base station. When the slave UE connects to the master UE in order to transmit/receive information, the first, second and third steps described above will be performed while the master UE takes the role of the base station.

Although the eNB emulation makes the master UE appear as a "regular" LTE base station to the slave UE, there are some differences that are not transparent to the slave UE. For example, the master UE needs to broadcast additional state information, which indicates that it is capable of D2D communication and that it is willing to accept a connection from the slave UE. Therefore, it has been proposed that the master UE encodes the state information in the MIB and/or SIB. When the slave UE searches for a suitable master UE, it may then, after cell search and selection, decode the MIB and/or the SIB in order to find out whether a connection to the master may be accepted or not. The slave UE may find a number of suitable master UEs. Hence, a disadvantage with encoding state information in the MIB and/or SIB is that power consumption of the slave UE and processing time for obtaining state information may be high. If the master UE has accepted a connection from the slave UE, it may not, due to hardware restrictions, be possible to decode the MIB and/or SIB for further slave UE possibly seeking to connect to the master UE. For the master UE, a disadvantage may hence be that the master UE needs to interrupt any ongoing transmission in order to decode MIB and/or SIB for the further UEs seeking to connect to the master UE.

### SUMMARY

An object may be how to improve performance of a user equipment capable of D2D communication.

According to an aspect, the object may be achieved by a method in a first user equipment for providing information about at least one of a first and a second connection state. The first connection state is related to a first connection between the first user equipment and a radio network node. The second connection state is related to a second connection between the first user equipment and a second user equipment. A radio communication system based on Orthogonal Frequency Division Multiplexing comprises the radio network node and the first and second user equipments. The first user equipment encodes information about at least one of the first and second connection states into a synchronization signal for synchronizing the second user equipment to the first user equipment. Next, the first user equipment sends the synchronization signal to at least the second user equipment. Thereby, the first user equipment provides information about at least one of the first and second connection states.

According to another aspect, the object may be achieved by a first user equipment configured for providing information about at least one of a first and a second connection state, the first connection state being related to a first connection between the first user equipment and a radio network node, the second connection state being related to a second connection between the first user equipment and a second user equipment. A radio communication system based on Orthogonal Frequency Division Multiplexing comprises the radio network node and the first and second user equipments. The first user equipment may comprise a processing circuit configured to encode information about at least one of the first and second connection states into a synchronization signal for synchronizing the second user equipment to the first user equipment. The first user equipment may further comprise a transmitter configured to send the synchronization signal to at least the second user equipment, thereby providing information about at least one of the first and second connection states.

According to a further aspect, the object may be achieved by a method in a second user equipment for obtaining information about at least one of a first and a second connection state. The first connection state is related to a first connection between a first user equipment and a radio network node. The second connection state is related to a second connection between the first user equipment and the second user equipment. A radio communication system based on Orthogonal Frequency Division Multiplexing comprises the radio network node and the first and second user equipment. The second user equipment receives a synchronization signal from the first user equipment. The second user equipment decodes the synchronization signal, thereby obtaining information about said at least one of the first and second connection states.

According to yet another aspect, the object may be achieved by a second user equipment configured for obtaining information about at least one of a first and a second connection state. The first connection state is related to a first connection between a first user equipment and a radio network node. The second connection state is related to a second connection between the first user equipment and the second user equipment. A radio communication system based on Orthogonal Frequency Division Multiplexing comprises the radio network node and the first and second user equipment. The second user equipment may comprise a receiver configured to receive a synchronization signal from the first user equipment. Moreover, the second user equipment may comprise a processing circuit configured to decode the synchronization signal, whereby information about said at least one of the first and second connection states is obtainable.

In some embodiments, information about at least one of the first and second connection states is encoded into a synchronization signal for synchronizing the second user equipment to the first user equipment. Next, the first user equipment sends to at least the second user equipment the synchronization signal. In this manner, efficient signaling of state is obtained. As a result, the above mentioned object is achieved.

An advantage may be that efficient signaling of state is achieved while power consumption of the first user equipment and/or second user equipment is reduced or maintained.

Another advantage may be that reading (or decoding) of synchronization is fast and that reading of the synchronization signal may be performed regardless of state of the second user equipment. For example, the second user equipment may actively send or receive data, while simultaneously reading the synchronization signal. As a result, service interruptions may be reduced (or even eliminated).

Further features of, and advantages with, embodiments presented herein will become apparent when studying the appended claims and the following description. It is to be understood that different features of the embodiments may be combined to create embodiments other than those described in the following, without departing from the scope of the present disclosure.

### BRIEF DESCRIPTION OF THE DRAWINGS

The various aspects of embodiments herein, including its particular features and advantages, will be readily understood from the following detailed description and the accompanying drawings, in which:
Fig. 1 shows a schematic overview of an exemplifying radio communication system,
Fig. 2 shows a schematic, combined signaling and flow chart over the methods presented herein,
Fig. 3 shows a block diagram over a number of states, which may encode into the synchronization signal.
Fig. 4 shows a schematic flow chart of an exemplifying method in a first user equipment,
Fig. 5 shows a schematic block diagram of an exemplifying first user equipment,
Fig. 6 shows a schematic flow chart of an exemplifying method in a second user equipment,
Fig. 7 shows a schematic block diagram of an exemplifying second user equipment,
Fig. 8 shows a combined signaling and flow chart in conjunction with which an exemplifying scenario with three user equipments is described, and
Fig. 9 shows a combined signaling and flow chart in conjunction with which an exemplifying scenario with two user equipments is described

### DETAILED DESCRIPTION

With reference to the LTE network implementing D2D communication mentioned in the background section of the present disclosure, it is assumed that the LTE network has functionality for allowing D2D devices to be visible (searchable) by other D2D devices, functionality for allowing D2D devices to search for other D2D devices, functionality for allowing D2D devices to create a logical connection (pairing) between each other to facilitate future communications. The logical connection should typically include setting up security relations. Moreover, it is assumed that the LTE network has functionality for allowing D2D devices to "page" (i.e. look for) other D2D devices for communication therewith, functionality for allowing D2D devices to send data to each other. These functionalities may be designed in an energy efficient manner, e.g. utilizing discontinuous reception and transmission (DRX/DTX), in order to conserve battery life of the user equipments. Furthermore, the functionalities need to be robust against interference from other devices in the area, i.e. communication should work even if other devices in the area are also communicating. Also, it may be that, as an example, a certain device needs to be able to operate in different modes at the same time, e.g. it needs to be "visible" for some devices even when it has an ongoing transmission with some other devices. As an example, a D2D device may be a user equipment.

Throughout the following description similar reference numerals have been used to denote similar elements, parts, items or features, when applicable. In the Figures, features that appear in some embodiments are indicated by dashed lines.

As used herein, the term "user equipment" may denote a mobile phone, a cellular phone, a Personal Digital Assistant (PDA) equipped with radio communication capabilities, a smart phone, a laptop equipped with an internal or external mobile broadband modem, a portable electronic radio communication device or the like.

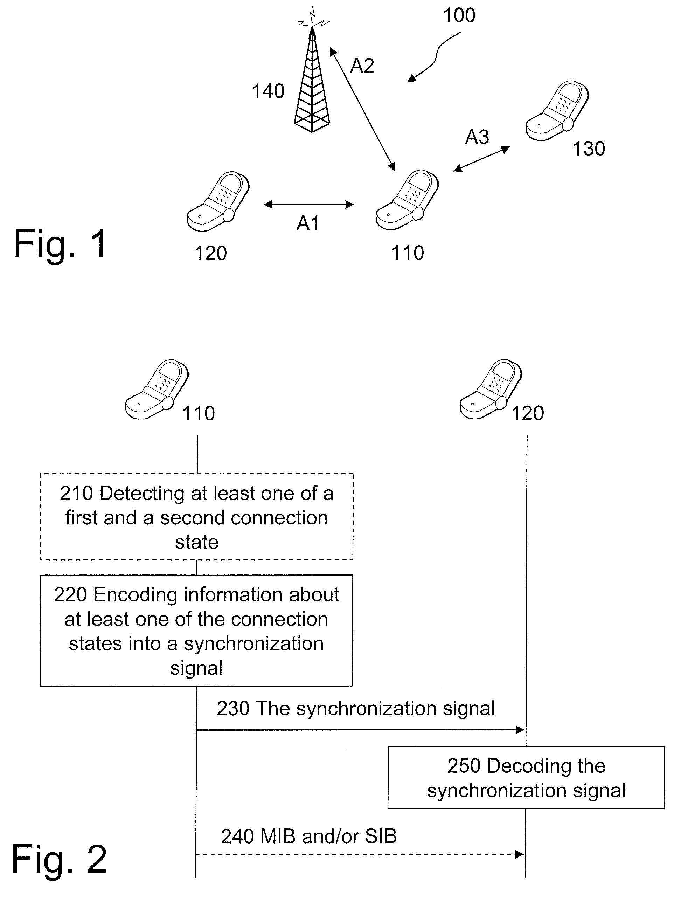

Fig. 1 shows a schematic overview of an exemplifying radio communication system 100. The radio communication system 100 may be a LTE system, which is a cellular radio communication system. The radio communication system 100 may comprise a first, a second and a third user equipment 110, 120, 130. Furthermore, the radio communication system 100 may comprise a radio network node 140, such as a radio base station, an evolved-NodeB (or eNB), a micro base station or the like. A first arrow A1 indicates that the first and second user equipments 110, 120 are capable of communicating with each other. A second arrow A2 indicates that the first user equipment 110 and the radio network node 140 are capable of communicating with each other. A third arrow A3 indicates that the first and third user equipments 110, 130 are capable of communicating with each other.

Referring to Fig. 2, there is shown a schematic, combined signaling and flow chart over an exemplifying method in the first user equipment 110 for providing information about at least one of a first and a second connection state and an exemplifying method in the second user equipment 120 for obtaining information about at least one of the first and second connection states. The first connection state is related to a first connection between the first user equipment 110 and a radio network node 140. The second connection state is related to a second connection between the first user equipment 110 and a second user equipment 120. A radio communication system 100 based on Orthogonal Frequency Division Multiplexing comprises the radio network node 140 and the first and second user equipments 110, 120.

Before actions of the methods are presented, the following may be noted in order to facilitate understanding of actions performed in some embodiments.

In some embodiments, the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device.

In some embodiments, the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

Now, returning to the presentation of the methods. The following actions may be performed. Notably, in some embodiments of the method the order of the actions may differ from what is indicated below.

### Action 210

In some embodiments, the first user equipment 110 detects at least one of the first and second connection states. In this manner, information about said at least one of the first and second connection states may be obtained.

### Action 220

The first user equipment 110 encodes information about at least one of the first and second connection states into a synchronization signal for synchronizing the second user equipment 120 to the first user equipment 110. According to some embodiments, the synchronization signal is used for cell search and for synchronization of the second user equipment 120 to the first user equipment 110.

### Action 230

The first user equipment 110 sends to at least the second user equipment 120 the synchronization signal, thereby providing information about at least one of the first and second connection states. Expressed differently, the second user equipment 120 receives from the first user equipment 110 the synchronization signal.

### Action 250

The second user equipment 120 decodes the synchronization signal. By decoding the synchronization signal, the second user equipment 120 may obtain information about said at least one of the first and second connection states.

### Action 240

In some embodiments, the first user equipment 110 sends to the second user equipment (120), a master information block comprising information indicative of one of the first, second and third states and/or indicative of one of the fourth, fifth and sixth states. Additionally or alternatively, the first user equipment 110 sends to the second user equipment (120) a system information block comprising information indicative of one of the first, second and third states and/or indicative of one of the fourth, fifth and sixth states. Expressed differently, the second user equipment 120 receives from the first user equipment 110 the master information block and/or the system information block.

An advantage may be that efficient signaling of state is achieved while power consumption of the first user equipment and second user equipment is kept low.

Another advantage may be that reading (or decoding) of synchronization is fast and that reading of the synchronization signal may be performed regardless of state of the second user equipment. For example, the second user equipment may actively send or receive data while simultaneously read the synchronization signal. As a result, service interruptions may be reduced (or even eliminated).

Using the PSS and/or SSS as a means to convey state information makes it possible for the second user equipment having an ongoing transmission to be able to detect, without service interruption, if there is any other user equipment, such as the first user equipment, in the area which other user equipment may be trying to contact the second user equipment. (The state information may comprise information about the first and second connection states.) Once the second user equipment detects that the first user equipment in the area is trying to contact the second user equipment, the second user equipment may tune away in order to receive additional information and/or it may transmit a message to the first user equipment to setup communications. This means that the second user equipment may be reachable by other user equipments without the need of broadcasting any PSS/SSS information of its own. This also means that an idle user equipment, such as in RRC Idle mode, with no active communication, but which may be reachable for paging or searching, only needs to perform background scanning for certain PSS/SSS codes to see if there is any user equipment who may be trying to reach the first user equipment. Performance of background scanning for certain PSS/SSS is much faster and significantly less battery consuming than being forced to constantly read the MIB/SIBs of neighboring user equipments.

As disclosed in some embodiments herein, changing the connection state from one state to another is signaled by changing the PSS/SSS sequence which means that user equipments in the area may quickly detect when some neighboring user equipment changes state and which state they have changed to (e.g. searching, paging). This is herein referred to as "Explicit PSS/SSS Signaling".

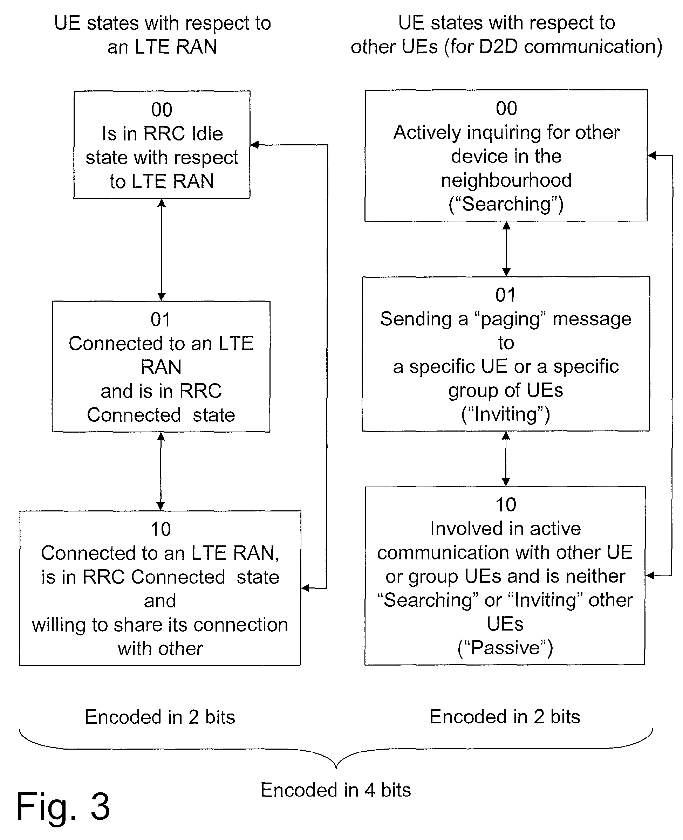

In Fig. 3, there is shown a block diagram over a number of states, which may be encoded into the synchronization signal. In a portion to the left in Fig. 3, there are illustrated states of the first user equipment 110 with respect to an LTE Radio Access Network (LTE RAN). In block 00 (or state 00), the first user equipment 110 is in RRC idle mode (or RRC Idle state) with respect to the LTE RAN. The reference numeral 00 indicates an exemplifying bit pattern that may be used to encode into the synchronization signal the state illustrated by this block. In block 01 (or state 01), the first user equipment 110 is connected to the LTE RAN and is in RRC Connected mode (or RRC Connected state). The reference numeral 01 indicates an exemplifying bit pattern that may be used to encode into the synchronization signal the state illustrated by this block. In block 10 (or state 10), the first user equipment 110 is connected to the LTE RAN and is in RRC Connected mode and is also willing to share this connection with other user equipments. The reference numeral 10 indicates an exemplifying bit pattern that may be used to encode into the synchronization signal the state illustrated by this block.

In a portion to the right in Fig. 3, there are illustrated states of the first user equipment 110 with respect to other user equipments (UEs), such as the second user equipment 120. In block 00 (or state 00), the first user equipment 110 actively inquires for other devices, such as the second UE, in the neighborhood. This may be referred to as "searching". The reference numeral 00 indicates an exemplifying bit pattern that may be used to encode into the synchronization signal the state illustrated by this block. In block 01 (or state 01), the first user equipment 110 sends a paging message to a specific user equipment, such as the second user equipment 120. This may be referred to as "inviting" or "paging". The reference numeral 01 indicates an exemplifying bit pattern that may be used to encode into the synchronization signal the state illustrated by this block. In block 10 (or state 10), the first user equipment 110 is involved in active communication with another user equipment, such as the third user equipment 130, and is neither "searching" nor "inviting" other user equipments. This may be referred to as "passive". The reference numeral 10 indicates an exemplifying bit pattern that may be used to encode into the synchronization signal the state illustrated by this block.

As an example, the exemplifying bit patterns above may be joined into a string of bits, where the length of the string is 4 bits. The first two bits of the string may be used for indicating state with respect to the LTE RAN and the last two bits of the string may be used for indicating state with respect to other user equipments. Since different bits of the string are assigned for indication of a respective state, the same bit pattern may be used to denote one state with respect to the LTE RAN and one state with respect to other user equipments.

In the example of Fig. 3, the UE may be visible, searching, inviting or accepting with respect to other user equipments and it may be in RRC Idle/Connected mode towards the radio communication system. The different states, illustrated in the left and right portion of Fig. 3 and encoded by 00, 01 and 10, may determine the specific PSS/SSS sequence.

In some embodiments, PSS/SSS may be used to signal that the connection state has changed by changing the PSS/SSS sequence. This may be referred to as "implicit PSS/SSS Signaling". The actual connection state information, i.e. in which state as illustrated by the blocks described above the user equipment is in, may be transferred in MIB/SIB. In this embodiment, the user equipment needs to acquire the MIB/SIB before it knows in which connection state the other user equipment is in, when detecting a change in a decoded PSS/SSS signal. Once the user equipment has acquired all the state information of all other user equipments in the area it only needs to monitor the PSS/SSS sequences to detect if some other user equipments started to do paging, searching etc. This monitoring may be very fast, and does not consume so much power or disturb other services. An advantage may be that the amount of connection state information that needs to be encoded in different PSS/SSS sequences is less than with explicit state information signaling in the PSS/SSS signal.

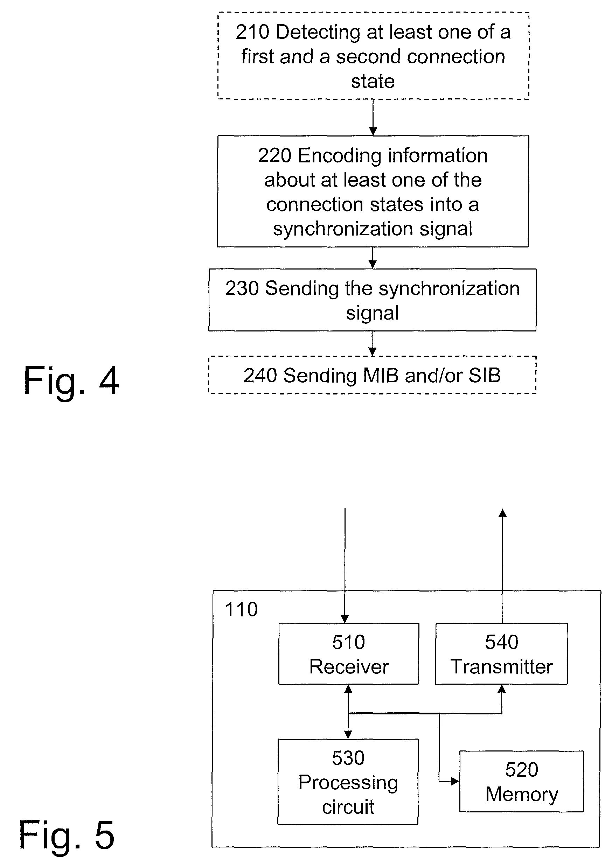

Now with reference to Fig. 4, there is shown a schematic flow chart of an exemplifying method in the first user equipment 110 for providing information about at least one of a first and a second connection state. The first connection state is related to a first connection between the first user equipment 110 and a radio network node 140. The second connection state is related to a second connection between the first user equipment 110 and a second user equipment 120. A radio communication system 100 based on Orthogonal Frequency Division Multiplexing comprises the radio network node 140 and the first and second user equipments 110, 120. The following actions may be performed by the first user equipment 110.

### Action 210

In some embodiments of the method in the first user equipment 110, the first user equipment 110 detects at least one of the first and second connection states.

### Action 220

The first user equipment 110 encodes information about at least one of the first and second connection states into a synchronization signal for synchronizing the second user equipment 120 to the first user equipment 110.

In this manner, efficient signaling of state is provided. Moreover, efficient signaling of state is achieved while keeping power consumption of the second user equipment 120 low.

### Action 230

The first user equipment 110 sends to at least the second user equipment 120 the synchronization signal, thereby providing information about at least one of the first and second connection states.

### Action 240

In some embodiments of the method in the first user equipment 110, the information encoded into the synchronization signal indicates that at least one of the first and second connection states has changed. The first user equipment 110 sends to the second user equipment 120 a master information block, being indicative of one of the first, second and third states and/or being indicative of one of the fourth, fifth and sixth states. Additionally or alternatively, the first user equipment 110 sends to the second user equipment 120 a system information block, being indicative of one of the first, second and third states and/or being indicative of one of the fourth, fifth and sixth states. As a result, a fewer number of (reserved) values for synchronization signals is needed as compared to embodiments according to which the synchronization signal is indicative of one of the first, second and third states and/or is indicative of one of the fourth, fifth and sixth states. According to the embodiment disclosed in this paragraph, it is still possible to update the state information, i.e. even though a fewer number of (reserved) values is needed. As long as the state is not changing, there is no need to read the MIB/SIB, whereby power savings in the second user equipment 120 may be obtained. Assuming that state changes, i.e. changes of the first and second connections states, are relatively rare, it does not cost so much to read MIB/SIB at these occasions. The key gain is that only the PSS/SSS need to be monitored.

For example, the information encode into the synchronization signal may be a flag, for example represented by only one bit, that indicates a change of state when the value of the flag is "1" and that indicates no change of state when the value of the flag is "0". In another example, the same value, for example "0", is encoded into the synchronization signal until at least one of the first and second connection states has changed. When a change is detected, the value of the flag is swapped, for example to "1" the value of the flag was "0" before detection of a change of state.

The information about at least one of the first and the second connection states may indicate a certain state as listed below or may indicate that the state of at least one of the first and second connection state has changed.

In some embodiments of the method in the first user equipment 110, the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device, and/or
wherein the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

The expression "capable of acting as a host device" may here be exemplified as that the first user equipment 110 is capable of accepting a connection, such as the second connection, from the second user equipment 120. As an example, when the second connection from the second user equipment is accepted, the first user equipment 110 may share the first connection with the second user equipment 120.

In some embodiments of the method in the first user equipment 110, the information encoded into the synchronization signal is indicative of one of the first, second and third states and/or is indicative of one of the fourth, fifth and sixth states. In this manner, there is no need to send information in MIB/SIB about in which state each of said at least one of the first and second connection states is.

In some embodiments of the method in the first user equipment 110, the synchronization signal comprises a Primary Synchronization Signal and/or a Secondary Synchronization Signal.

In some embodiments of the method in the first user equipment 110, the information about the first connection state is encoded by a first set of two bits of the synchronization signal.

In some embodiments of the method in the first user equipment 110, the information about the second connection state is encoded by a second set of two bits of the synchronization signal.

In Fig. 5, there is shown a schematic block diagram of an exemplifying first user equipment 110 configured for providing information about at least one of a first and a second connection state. The first connection state is related to a first connection between the first user equipment 110 and a radio network node 140. The second connection state is related to a second connection between the first user equipment 110 and a second user equipment 120. A radio communication system 100 based on Orthogonal Frequency Division Multiplexing comprises the radio network node 140 and the first and second user equipments 110, 120. The first user equipment 110 may comprise a processing circuit 530 configured to encode information about at least one of the first and second connection states into a synchronization signal for synchronizing the second user equipment 120 to the first user equipment 110. The first user equipment 110 may further comprise a transmitter 540 configured to send, to at least the second user equipment 120, the synchronization signal, thereby providing information about at least one of the first and second connection states.

In some embodiments of the first user equipment 110, the processing circuit 530 may be a processing unit, a processor, an application specific integrated circuit (ASIC), a field-programmable gate array (FPGA) or the like. As an example, a processor, an ASIC, an FPGA or the like may comprise one or more processor kernels.

In some embodiments of the first user equipment 110, the first user equipment 110 may further comprise a memory 520 for storing software to be executed by, for example, the processing circuit. The software may comprise instructions to enable the processor to perform the method in the first user equipment 110 as described above. The memory 520 may be a hard disk, a magnetic storage medium, a portable computer diskette or disc, Flash memory, random access memory or the like.

In some embodiments of the first user equipment 110, the first user equipment 110 may further comprise a receiver 510 configured to receive data from another user equipment.

In some embodiments of the first user equipment 110, the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device, and/or
wherein the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

In some embodiments of the first user equipment 110, the processing circuit 539 may be configured to detect at least one of the first and second connection states.

In some embodiments of the first user equipment 110, the information encoded into the synchronization signal is indicative of one of the first, second and third states and/or is indicative of one of the fourth, fifth and sixth states.

In some embodiments of the first user equipment 110, the information encoded into the synchronization signal indicates that at least one of the first and second connection states has changed. The transmitter 540 may further be configured to send to the second user equipment 120 a master information block and/or a system information block, being indicative of state of at least one of the first and second connection states.

In some embodiments of the first user equipment 110, the synchronization signal comprises a Primary Synchronization Signal and/or a Secondary Synchronization Signal.

In some embodiments of the first user equipment 110, the information about the first connection state is encoded by a first set of two bits of the synchronization signal.

In some embodiments of the first user equipment 110, the information about the second connection state is encoded by a second set of two bits of the synchronization signal.

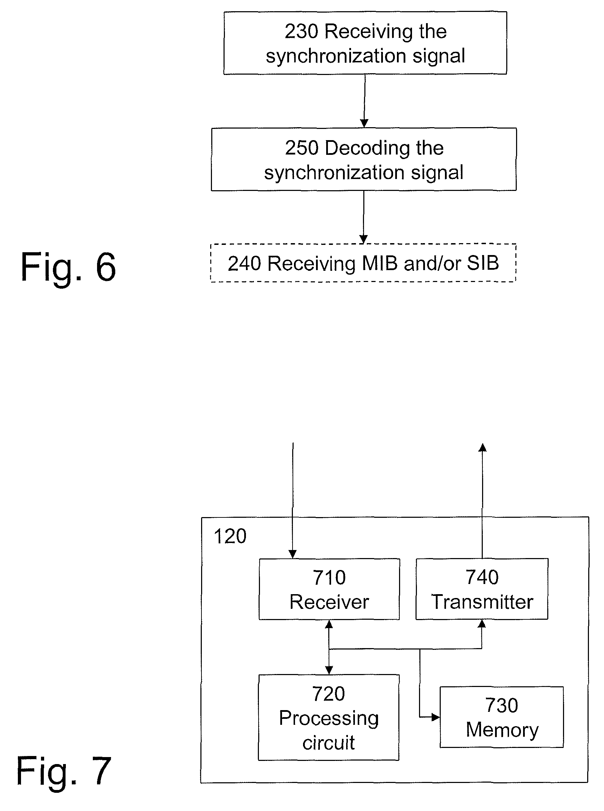

Turning to Fig. 6, there is shown a schematic flow chart of an exemplifying method in the second user equipment 120 for obtaining information about at least one of a first and a second connection state. The first connection state is related to a first connection between a first user equipment 110 and a radio network node 140. The second connection state is related to a second connection between the first user equipment 110 and the second user equipment 120. A radio communication system 100 based on Orthogonal Frequency Division Multiplexing comprises the radio network node 140 and the first and second user equipment 110, 120. The following actions may be performed by the second user equipment 120.

### Action 230

The second user equipment 120 receives, from the first user equipment 120, a synchronization signal; and

### Action 250

The second user equipment 120 decodes the synchronization signal. By decoding the synchronization signal, the second user equipment 120 may obtain information about said at least one of the first and second connection states. An advantage may be that it may be fast to read the synchronization signal and that reading of the synchronization signal may be done regardless of state of the second user equipment 120. For example, the second user equipment 120 may actively send or receive data while the second user equipment 120 at the same time decodes the synchronization signal. Thus, reading of the synchronization signal may be performed without causing any service interruption.

### Action 240

In some embodiments of the method in the second user equipment 120, the information obtained by decoding the synchronization signal indicates that at least one of the first and second connection states has changed. The second user equipment 120 receives from the first user equipment 110 a master information block, being indicative of one of the first, second and third states and/or being indicative of one of the fourth, fifth and sixth states. Additionally or alternatively, the second user equipment 120 receives from the first user equipment 110 a system information block, being indicative of one of the first, second and third states and/or being indicative of one of the fourth, fifth and sixth states.

In some embodiments of the method in the second user equipment 120, the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device, and/or
wherein the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

In some embodiments of the method in the second user equipment 120, the information obtained by decoding the synchronization signal is indicative of one of the first, second and third states and/or is indicative of one of the fourth, fifth and sixth states.

In some embodiments of the method in the second user equipment 120, the synchronization signal comprises a Primary Synchronization Signal and/or a Secondary Synchronization Signal.

In some embodiments of the method in the second user equipment 120, the information obtained by decoding the synchronization signal is decoded from a first set of two bits of the synchronization signal.

In some embodiments of the method in the second user equipment 120, the information obtained by decoding the synchronization signal is decoded from a second set of two bits of the synchronization signal.

In Fig. 7, there is shown a schematic block diagram of an exemplifying second user equipment 120 configured for obtaining information about at least one of a first and a second connection state. The first connection state is related to a first connection between a first user equipment 110 and a radio network node 140. The second connection state is related to a second connection between the first user equipment 110 and the second user equipment 120. A radio communication system 100 based on Orthogonal Frequency Division Multiplexing comprises the radio network node 140 and the first and second user equipment 110, 120. The second user equipment 120 may comprise a receiver 710 configured to receive, from the first user equipment 120, a synchronization signal, and a processing circuit 720 configured to decode the synchronization signal, whereby information about said at least one of the first and second connection states is obtainable. The processing circuit 720 may be a processing unit, a processor, an application specific integrated circuit (ASIC), a field-programmable gate array (FPGA) or the like. As an example, a processor, an ASIC, an FPGA or the like may comprise one or more processor kernels. Moreover, the second user equipment 120 may comprise a memory 730 for storing software to be executed by, for example, the processing circuit 720. The software may comprise instructions to enable the processor to perform the method in the second user equipment 120 described above. The second user equipment 120 may further comprise a transmitter 740 configured to transmit data to another user equipment.

In some embodiments of the second user equipment 120, the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device, and/or
wherein the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

In some embodiments of the second user equipment 120, the information obtained by decoding the synchronization signal is indicative of one of the first, second and third states and/or is indicative of one of the fourth, fifth and sixth states.

In some embodiments of the second user equipment 120, the information obtained by decoding the synchronization signal indicates that at least one of the first and second connection states has changed. The receiver 710 may further be configured to receive from the first user equipment 110 a master information block and/or a system information block, being indicative of in which state each of said at least one of the first and second connection states is.

In some embodiments of the method in the second user equipment 120, the synchronization signal comprises a Primary Synchronization Signal and/or a Secondary Synchronization Signal.

In some embodiments of the second user equipment 120, the information obtained by decoding the synchronization signal is decoded from a first set of two bits of the synchronization signal.

In some embodiments of the second user equipment 120, the information obtained by decoding the synchronization signal is decoded from a second set of two bits of the synchronization signal.

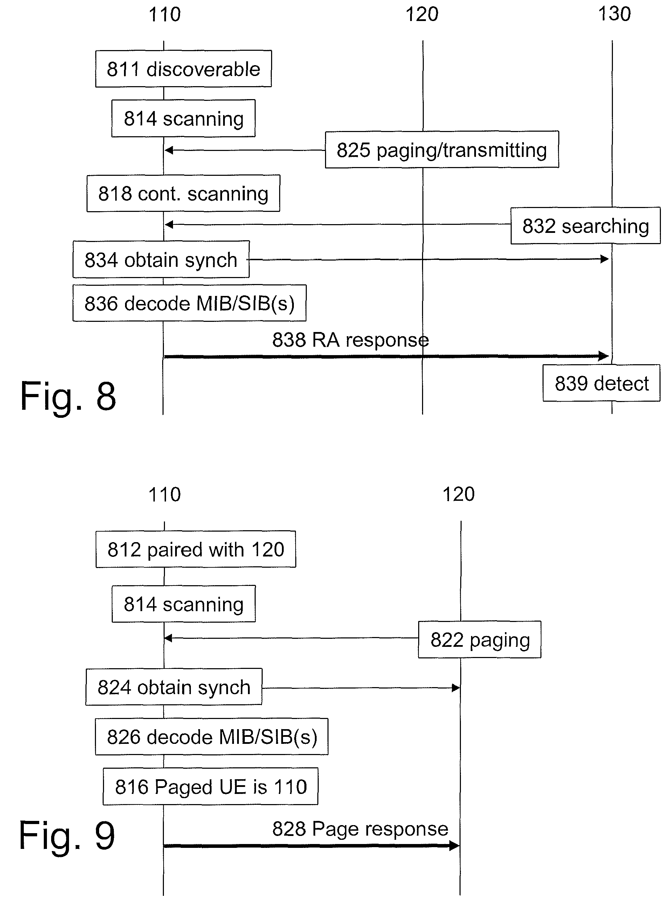

With reference to Fig. 8 and Fig. 9, there are shown combined signaling and flow charts in conjunction with which a first and a second scenario in which the methods presented herein may be applied, are described. It may be noted that a message like paging response and the like, which may be considered to be a dedicated message, is indicated by bold lines. In contrast, transmission of MIB/SIB, synchronization signals and the like signals are broadcasted, as indicated by thin solid lines, by the first user equipment. In this manner, the second user equipment by itself obtains information from this (blindly) broadcasted information. For example, the second user equipment may perform background scanning of a radio interface to detect the broadcasted information.

Moreover, in conjunction with Fig. 8 and 9, reference is made to the fourth, fifth and sixth state mentioned above such as to give examples of when a user equipment is in one of these states. As an example, the user equipment may be in the fourth state, when the second connection is in the fourth state.

In Fig. 8, a first scenario with three user equipments is illustrated. The three user equipments are a first user equipment 110, a second user equipment 120 and a third user equipment 130. The first scenario describes how the first user equipment may be detected by the third user equipment, which may search for user equipments, such as the first user equipment, to be paired with. As an example, searching may be performed when the third user equipment is to be connected to a head set, a printer or the like. In the first scenario, the following actions are performed.

### Action 811

The first user equipment 110 is set in visible state (or "discoverable") meaning that it should send an inquiry response message to any other UE (in the fourth state) that is searching for visible UEs. As an example, a user of the first user equipment may set the first user equipment in visible state.

### Action 814

The first user equipment 110 performs background scanning for PSS/SSS signals. The background scanning may be continuous or periodical (following some background scanning pattern).

### Action 825

The first user equipment 110 may then detect that the second user equipment 120 is transmitting a PSS/SSS signal associated with ongoing data transmission and not capable of acting as a host device. The first user equipment 110 ignores this signal and continues with the background scanning, because the first user equipment 110 is in visible state, which means it, i.e. the first user equipment, responds to a user equipment (in the fourth state) transmitting a PSS/SSS signal indicating that the user equipment looks for (or searches for) devices to connect to.

### Action 832

The first user equipment 110 may then detect that the third user equipment 130 is transmitting a PSS/SSS signal associated with searching for visible UEs. The third user equipment may be in the fourth state.

### Action 834

The first user equipment 110 obtains Downlink synchronization with the third user equipment 130. Thus, the third user equipment 130 connects to the first user equipment 110.

### Action 836

The first user equipment 110 decodes MIB/SIBs transmitted by the third user equipment 130. The MIB/SIB comprises information about the identity of the third user equipment 130 as well as other information useful for communication with the third user equipment 130. The MIB/SIB may also comprise information about an inquiry request in the form of PSS/SSS signal associated with searching for visible UEs from the third user equipment 130.

### Action 838

The first user equipment 110 performs an access procedure with the third user equipment 130 and transmits an inquiry response message to the third user equipment 130. As an example, the first and third user equipment may now be paired. After the transmission of the inquiry response message, the first user equipment 110 disconnects from the third user equipment 130 and continues with the background scanning. As an example, the first user equipment 110 may disconnect if there is no data to transfer between the first and third user equipment 110, 130.

### Action 839

The third user equipment 130 receives the inquire response message and stores the identity and/or information provided by the first user equipment 110. This information can be presented to the end user of the third user equipment 130 and/or be used for further signaling with first user equipment 110.

Fig. 9 shows a combined signaling and flow chart in conjunction with which an exemplifying, second scenario with two user equipments is described. The two user equipments are a first user equipment 110 and a second user equipment 120. In the second scenario, the first and second user equipments 110, 120 have previously been paired. Paging may be performed to connect in order to transfer any kind of data, such as a file or a stream of sound/video data (for a headset or for video camera).

### Action 812

The first user equipment 110 shall listen for paging messages from the second user equipment 120.

### Action 814

The first user equipment 110 performs background scanning for PSS/SSS signals. The background scanning may be continuous or periodical (following some background scanning pattern). In this manner, the first user equipment 110 may listen for paging messages from the second user equipment 120.

### Action 822

The first user equipment 110 detects that the second user equipment 120 is transmitting a PSS/SSS signal associated with paging (or inviting). The second user equipment may be in the fifth state.

### Action 824

The first user equipment 110 obtains Downlink synchronization with the second user equipment 120, because the detected PSS/SSS signal indicates paging and that the UE1 may listens for paging messages according to action 812.

### Action 826

The first user equipment 110 decodes MIB/SIBs. The MIB/SIB may comprise information about the identity of second user equipment 120 as well as other information useful for communication with the second user equipment 120.

### Action 816

The MIB/SIB may also comprise the identity of the UE being paged. In this case, the paging identity is matching the identity of the first user equipment 110, since the first and second user equipments 110, 120 have been paired. If the paging identity does not match the first user equipment 110 ignores the second user equipment 120 and continues with the background scanning.

### Action 828

The first user equipment 110 initiates paging response procedure.

In a third scenario (not shown), there are three user equipments present: a first user equipment 110, a second user equipment 120 and a third user equipment 130. The third scenario describes how the first user equipment 110, having an ongoing communication with second user equipment 120, also wants to communicate with the third user equipment 130. The first user equipment 110 therefore changes its PSS/SSS sequence from "ongoing transmission" (the sixth state) to "paging" (the fifth state). The first user equipment 110 has previously been paired with the third user equipment 130. The third user equipment 130 performs background scanning for PSS/SSS signals. The background scanning may be continuous or periodical (following some background scanning pattern). The third user equipment 130 will, when it detects that it is being paged by the first user equipment 110 (in a similar way as the second scenario directly above), perform the access procedure to the first user equipment 110. In this manner, it is made possible for the first user equipment 110 to communicate both with the second user equipment 120 and the third user equipment 130.

In some embodiments, there is defined multiple values of PSS / SSS for each state, e.g. "paging", "searching". In this manner, a risk of two user equipments using the same PSS/SSS is reduced. The user equipment may then try to select an appropriate PSS/SSS sequence which does not seem to be used by other user equipments in the area. The solution would not avoid collisions all together (e.g. due to hidden terminal problem) but should at least minimize them. Furthermore, in order to avoid that a user equipment need to decode the MIB/SIB of another UE multiple times when the MIB/SIB has not changed, it is possible for user equipments to only change the PSS/SSS sequence when the MIB/SIB has been updated so that a user equipment that has acquired the MIB/SIB does not need to re-acquire it for the same PSS/SSS.

Even though some embodiments have been described, many different alterations, modifications and the like thereof will become apparent for those skilled in the art. The described embodiments are therefore not intended to limit the scope of the present disclosure.

## Claims

1. A method in a first user equipment (110) for providing information about at least one of a first and a second connection state, the first connection state being related to a first connection between the first user equipment (110) and a radio network node (140), the second connection state being related to a second connection between the first user equipment (110) and a second user equipment (120), wherein a radio communication system (100) based on Orthogonal Frequency Division Multiplexing comprises the radio network node (140) and the first and second user equipments (110, 120), wherein the method comprises:
encoding (220) information about at least one of the first and second connection states into a synchronization signal for synchronizing the second user equipment (120) to the first user equipment (110); and
sending (230) the synchronization signal to at least the second user equipment (120), thereby providing information about at least one of the first and second connection states.

2. The method according to claim 1, wherein the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device, and/or
wherein the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

3. The method according to claim 2, wherein the information encoded into the synchronization signal is indicative of one of the first, second and third states and/or is indicative of one of the fourth, fifth and sixth states..

4. The method according to claim 2, wherein the information encoded into the synchronization signal indicates that at least one of the first and second connection states has changed, the method further comprising:
sending (240), to the second user equipment (120), a master information block, comprising information indicative of one of the first, second and third states and/or indicative of one of the fourth, fifth and sixth states, and/or
sending (240), to the second user equipment (120) a system information block, comprising information indicative of one of the first, second and third states and/or indicative of one of the fourth, fifth and sixth states.

5. The method according to any one of the preceding claims, wherein the synchronization signal comprises a Primary Synchronization Signal and/or a Secondary Synchronization Signal.

6. A first user equipment (110) configured for providing information about at least one of a first and a second connection state, the first connection state being related to a first connection between the first user equipment (110) and a radio network node (140), the second connection state being related to a second connection between the first user equipment (110) and a second user equipment (120), wherein a radio communication system (100) based on Orthogonal Frequency Division Multiplexing comprises the radio network node (140) and the first and second user equipments (110, 120), wherein the first user equipment (110) comprises
a processing circuit (530) configured to encode (220) information about at least one of the first and second connection states into a synchronization signal for synchronizing the second user equipment (120) to the first user equipment (110), and
a transmitter (540) configured to send the synchronization signal to at least the second user equipment (120), thereby providing information about at least one of the first and second connection states.

7. A method in a second user equipment (120) for obtaining information about at least one of a first and a second connection state, the first connection state being related to a first connection between a first user equipment (110) and a radio network node (140), the second connection state being related to a second connection between the first user equipment (110) and the second user equipment (120), wherein a radio communication system (100) based on Orthogonal Frequency Division Multiplexing comprises the radio network node (140) and the first and second user equipment (110, 120), wherein the method comprises:
receiving (230) a synchronization signal from the first user equipment (120);
and
decoding (250) information about said at least one of the first and
second connection states from the received synchronization signal..

8. The method according to claim 7, wherein the first connection state comprises:
- a first state indicative of that the first user equipment (110) is idle with respect to the radio network node (140),
- a second state indicative of that the first user equipment (110) is connected with respect to the radio network node (140), or
- a third state indicative of that the first user equipment (110) is connected with respect to the radio network node (140) and is capable of acting as a host device, and/or
wherein the second connection state comprises:
- a fourth state indicative of that the first user equipment (110) is searching with respect to the second user equipment (120),
- a fifth state indicative of that the first user equipment (110) is inviting with respect to the second user equipment (120), or
- a sixth state indicative of that the first user equipment (110) is connected with respect to the second user equipment (120).

9. The method according to claim 7 or 8, wherein the information obtained by decoding the synchronization signal is indicative of one of the first, second and third states and/or is indicative of one of the fourth, fifth and sixth states.

10. The method according to claim 8 or 9, wherein the information obtained by decoding the synchronization signal indicates that at least one of the first and second connection states has changed, the method further comprising:
receiving (240) from the first user equipment (110) a master information block, comprising information indicative of one of the first, second and third states and/or indicative of one of the fourth, fifth and sixth states; and/or
receiving (240) from the first user equipment (110) a system information block, comprising information indicative of one of the first, second and third states and/or indicative of one of the fourth, fifth and sixth states.

11. The method according to any one of claims 7-10, wherein the synchronization signal comprises a Primary Synchronization Signal and/or a Secondary Synchronization Signal.

12. A second user equipment (120) configured for obtaining information about at least one of a first and a second connection state, the first connection state being related to a first connection between a first user equipment (110) and a radio network node (140), the second connection state being related to a second connection between the first user equipment (110) and the second user equipment (120), wherein a radio communication system (100) based on Orthogonal Frequency Division Multiplexing comprises the radio network node (140) and the first and second user equipment (110, 120), wherein the second user equipment (120) comprises
a receiver (710) configured to receive a synchronization signal from the first user equipment (120), and
a processing circuit (720) configured to decode information about said at least one of the first and second connection states from the received synchronization signal..

## Patentansprüche

1. Verfahren in einem ersten Benutzergerät (110) zum Bereitstellen einer Information über zumindest einen eines ersten und eines zweiten Verbindungsstatus, wobei der erste Verbindungsstatus mit einer ersten Verbindung zwischen dem ersten Benutzergerät (110) und einem Funknetzwerkknoten (140) in Verbindung steht, wobei der zweite Verbindungsstatus mit einer zweiten Verbindung zwischen dem ersten Benutzergerät (110) und einem zweiten Benutzergerät (120) in Verbindung steht, wobei ein Funkkommunikationssystem (100) beruhend auf einem orthogonalen Frequenzmultiplexverfahren den Funknetzwerkknoten (140) und das erste und zweite Benutzergerät (110, 120) umfasst, wobei das Verfahren Folgendes umfasst:
Codieren (220) einer Information über zumindest einen des ersten und zweiten Verbindungsstatus in ein Synchronisationssignal zum Synchronisieren des zweiten Benutzergeräts (120) mit dem ersten Benutzergerät (110); und
Senden (230) des Synchronisationssignals an zumindest das zweite Benutzergerät (120), wodurch eine Information über zumindest einen des ersten und zweiten Verbindungsstatus bereitgestellt wird.

2. Verfahren nach Anspruch 1, wobei der erste Verbindungsstatus Folgendes umfasst:
- einen ersten Status, der darauf hinweist, dass das erste Benutzergerät (110) in Bezug auf den Funknetzwerkknoten (140) untätig ist,
- einen zweiten Status, der darauf hinweist, dass das erste Benutzergerät (110) in Bezug auf den Funknetzwerkknoten (140) verbunden ist, oder
- einen dritten Status, der darauf hinweist, dass das erste Benutzergerät (110) in Bezug auf den Funknetzwerkknoten (140) verbunden ist und als eine Host-Vorrichtung agieren kann, und/oder
wobei der zweite Verbindungsstatus Folgendes umfasst:
- einen vierten Status, der darauf hinweist, dass das erste Benutzergerät (110) in Bezug auf das zweite Benutzergerät (120) sucht,
- einen fünften Status, der darauf hinweist, dass das erste Benutzergerät (110) in Bezug auf das zweite Benutzergerät (120) einlädt, oder
- einen sechsten Status, der darauf hinweist, dass das erste Benutzergerät (110) in Bezug auf das zweite Benutzergerät (120) verbunden ist.

3. Verfahren nach Anspruch 2, wobei die im Synchronisationssignal codierte Information auf einen des ersten, zweiten und dritten Status hinweist und/oder auf einen des vierten, fünften und sechsten Status hinweist.

4. Verfahren nach Anspruch 2, wobei die im Synchronisationssignal codierte Information anzeigt, dass sich zumindest einer des ersten und zweiten Verbindungsstatus geändert hat, wobei das Verfahren ferner Folgendes umfasst:
Senden (240) eines Master-Informationsblocks an das zweite Benutzergerät (120), umfassend eine Information, die auf einen des ersten, zweiten und dritten Status hinweist und/oder auf einen des vierten, fünften und sechsten Status hinweist und/oder
Senden (240) eines Systeminformationsblocks an das zweite Benutzergerät (120), umfassend eine Information, die auf einen des ersten, zweiten oder dritten Status hinweist und/oder auf einen des vierten, fünften und sechsten Status hinweist.

5. Verfahren nach einem der vorstehenden Ansprüche, wobei das Synchronisationssignal ein primäres Synchronisationssignal und/oder ein sekundäres Synchronisationssignal umfasst.

6. Erstes Benutzergerät (110), konfiguriert zum Bereitstellen einer Information über zumindest einen eines ersten und eines zweiten Verbindungsstatus, wobei der erste Verbindungsstatus mit einer ersten Verbindung zwischen dem ersten Benutzergerät (110) und einem Funknetzwerkknoten (140) in Verbindung steht, wobei der zweite Verbindungsstatus mit einer zweiten Verbindung zwischen dem ersten Benutzergerät (110) und einem zweiten Benutzergerät (120) in Verbindung steht, wobei ein Funkkommunikationssystem (100) beruhend auf einem orthogonalen Frequenzmultiplexverfahren den Funknetzwerkknoten (140) und das erste und zweite Benutzergerät (110, 120) umfasst, wobei das erste Benutzergerät (110) Folgendes umfasst:
eine Verarbeitungsschaltung (530), konfiguriert zum Codieren (220) einer Information über zumindest einen des ersten und zweiten Verbindungsstatus in ein Synchronisationssignal zum Synchronisieren des zweiten Benutzergeräts (120) mit dem ersten Benutzergerät (110), und
eine Sendevorrichtung (540), konfiguriert zum Senden des Synchronisationssignals an zumindest das zweite Benutzergerät (120), wodurch die Information über zumindest einen des ersten und zweiten Verbindungsstatus bereitgestellt wird.

7. Verfahren in einem zweiten Benutzergerät (120) zum Erhalten einer Information über zumindest einen eines ersten und eines zweiten Verbindungsstatus, wobei der erste Verbindungsstatus mit einer ersten Verbindung zwischen einem ersten Benutzergerät (110) und einem Funknetzwerkknoten (140) in Verbindung steht, wobei der zweite Verbindungsstatus mit einer zweiten Verbindung zwischen dem ersten Benutzergerät (110) und dem zweiten Benutzergerät (120) in Verbindung steht, wobei ein Funkkommunikationssystem (100) beruhend auf einem orthogonalen Frequenzmultiplexverfahren den Funknetzwerkknoten (140) und das erste und zweite Benutzergerät (110, 120) umfasst, wobei das Verfahren Folgendes umfasst:
Empfangen (230) eines Synchronisationssignals vom ersten Benutzergerät (120); und
Decodieren (250) einer Information über den zumindest einen des ersten und zweiten Verbindungsstatus vom empfangenen Synchronisationssignal.

8. Verfahren nach Anspruch 7, wobei der erste Verbindungsstatus Folgendes umfasst:
- einen ersten Status, der darauf hinweist, dass das erste Benutzergerät (110) in Bezug auf den Funknetzwerkknoten (140) untätig ist,
- einen zweiten Status, der darauf hinweist, dass das erste Benutzergerät (110) in Bezug auf den Funknetzwerkknoten (140) verbunden ist, oder
- einen dritten Status, der darauf hinweist, dass das erste Benutzergerät (110) in Bezug auf den Funknetzwerkknoten (140) verbunden ist und als eine Host-Vorrichtung agieren kann, und/oder
wobei der zweite Verbindungsstatus Folgendes umfasst:
- einen vierten Status, der darauf hinweist, dass das erste Benutzergerät (110) in Bezug auf das zweite Benutzergerät (120) sucht,
- einen fünften Status, der darauf hinweist, dass das erste Benutzergerät (110) in Bezug auf das zweite Benutzergerät (120) einlädt, oder
- einen sechsten Status, der darauf hinweist, dass das erste Benutzergerät (110) in Bezug auf das zweite Benutzergerät (120) verbunden ist.

9. Verfahren nach Anspruch 7 oder 8, wobei die erhaltene Information durch das Decodieren des Synchronisationssignals auf einen des ersten, zweiten und dritten Status hinweist und/oder auf einen des vierten, fünften und sechsten Status hinweist.

10. Verfahren nach Anspruch 8 oder 9, wobei die erhaltene Information durch das Decodieren des Synchronisationssignals anzeigt, dass sich zumindest einer des ersten und zweiten Verbindungsstatus geändert hat, wobei das Verfahren ferner Folgendes umfasst:
Empfangen (240) eines Master-Informationsblocks vom ersten Benutzergerät (110), umfassend eine Information, die auf einen des ersten, zweiten und dritten Status hinweist und/oder auf einen des vierten, fünften und sechsten Status hinweist; und/oder
Empfangen (240) eines Systeminformationsblocks vom ersten Benutzergerät (110), umfassend eine Information, die auf einen des ersten, zweiten und dritten Status hinweist und/oder auf einen des vierten, fünften und sechsten Status hinweist.

11. Verfahren nach einem der Ansprüche 7 bis 10, wobei das Synchronisationssignal ein primäres Synchronisationssignal und/oder ein sekundäres Synchronisationssignal umfasst.

12. Ein zweites Benutzergerät (120), konfiguriert zum Erhalten einer Information über zumindest einen eines ersten und eines zweiten Verbindungsstatus, wobei der erste Verbindungsstatus mit einer ersten Verbindung zwischen einem ersten Benutzergerät (110) und einem Funknetzwerkknoten (140) in Verbindung steht, wobei der zweite Verbindungsstatus mit einer zweiten Verbindung zwischen dem ersten Benutzergerät (110) und dem zweiten Benutzergerät (120) in Verbindung steht, wobei ein Funkkommunikationssystem (100) beruhend auf einem orthogonalen Frequenzmultiplexverfahren den Funknetzwerkknoten (140) und das erste und zweite Benutzergerät (110, 120) umfasst, wobei das zweite Benutzergerät (120) Folgendes umfasst:
eine Empfangsvorrichtung (710), konfiguriert zum Empfangen eines Synchronisationssignals vom ersten Benutzergerät (120), und
eine Verarbeitungsschaltung (720), konfiguriert zum Decodieren einer Information über den zumindest einen des ersten und zweiten Verbindungsstatus vom empfangenen Synchronisationssignal.

## Revendications

1. Procédé, mis en oeuvre dans un premier équipement d'utilisateur (110), de fourniture d'informations concernant au moins l'un parmi un premier état de connexion et un second état de connexion, le premier état de connexion étant connexe à une première connexion entre le premier équipement d'utilisateur (110) et un noeud de réseau radio (140), le second état de connexion étant connexe à une seconde connexion entre le premier équipement d'utilisateur (110) et un second équipement d'utilisateur (120), dans lequel un système de radiocommunication (100) basé sur un multiplexage par répartition orthogonale de la fréquence comporte le noeud de réseau radio (140) et les premier et second équipements d'utilisateur (110, 120), dans lequel le procédé comporte les étapes ci-dessous consistant à :
coder (220) des informations concernant au moins l'un des premier et second états de connexion dans un signal de synchronisation pour synchroniser le second équipement d'utilisateur (120) sur le premier équipement d'utilisateur (110) ; et
envoyer (230) le signal de synchronisation au moins au second équipement d'utilisateur (120), ce qui permet par conséquent de fournir des informations concernant au moins l'un des premier et second états de connexion.

2. Procédé selon la revendication 1, dans lequel le premier état de connexion comporte :
- un premier état indicatif du fait que le premier équipement d'utilisateur (110) est au repos relativement au noeud de réseau radio (140) ;
- un deuxième état indicatif du fait que le premier équipement d'utilisateur (110) est connecté relativement au noeud de réseau radio (140) ; ou
- un troisième état indicatif du fait que le premier équipement d'utilisateur (110) est connecté relativement au noeud de réseau radio (140) et est apte à agir en qualité de dispositif hôte ; et/ou
dans lequel le second état de connexion comporte :
- un quatrième état indicatif du fait que le premier équipement d'utilisateur (110) effectue une recherche relativement au second équipement d'utilisateur (120) ;
- un cinquième état indicatif du fait que le premier équipement d'utilisateur (110) émet une invitation relativement au second équipement d'utilisateur (120) ; ou
- un sixième état indicatif du fait que le premier équipement d'utilisateur (110) est connecté relativement au second équipement d'utilisateur (120).

3. Procédé selon la revendication 2, dans lequel les informations codées dans le signal de synchronisation sont indicatives de l'un des premier, deuxième et troisième états et/ou sont indicatives de l'un des quatrième, cinquième et sixième états.

4. Procédé selon la revendication 2, dans lequel les informations codées dans le signal de synchronisation indiquent qu'au moins l'un des premier et second états de connexion a été modifié, le procédé comprenant en outre les étapes ci-dessous consistant à :
envoyer (240), au second équipement d'utilisateur (120), un bloc d'informations principal comprenant des informations indicatives de l'un des premier, deuxième et troisième états et/ou indicatives de l'un des quatrième, cinquième et sixième états ; et/ou
envoyer (240), au second équipement d'utilisateur (120), un bloc d'informations système comprenant des informations indicatives de l'un des premier, deuxième et troisième états et/ou indicatives de l'un des quatrième, cinquième et sixième états.

5. Procédé selon l'une quelconque des revendications précédentes, dans lequel le signal de synchronisation comporte un signal de synchronisation primaire et/ou un signal de synchronisation secondaire.

6. Premier équipement d'utilisateur (110) configuré de manière à fournir des informations concernant au moins l'un parmi un premier état de connexion et un second état de connexion, le premier état de connexion étant connexe à une première connexion entre le premier équipement d'utilisateur (110) et un noeud de réseau radio (140), le second état de connexion étant connexe à une seconde connexion entre le premier équipement d'utilisateur (110) et un second équipement d'utilisateur (120), dans lequel un système de radiocommunication (100) basé sur un multiplexage par répartition orthogonale de la fréquence comporte le noeud de réseau radio (140) et les premier et second équipements d'utilisateur (110, 120), dans lequel le premier équipement d'utilisateur (110) comporte :
un circuit de traitement (530) configuré de manière à coder (220) des informations concernant au moins l'un des premier et second états de connexion dans un signal de synchronisation pour synchroniser le second équipement d'utilisateur (120) sur le premier équipement d'utilisateur (110) ; et
un émetteur (540) configuré de manière à envoyer le signal de synchronisation au moins au second équipement d'utilisateur (120), ce qui permet par conséquent de fournir des informations concernant au moins l'un des premier et second états de connexion.

7. Procédé, mis en oeuvre dans un second équipement d'utilisateur (120), d'obtention d'informations concernant au moins l'un parmi un premier état de connexion et un second état de connexion, le premier état de connexion étant connexe à une première connexion entre le premier équipement d'utilisateur (110) et un noeud de réseau radio (140), le second état de connexion étant connexe à une seconde connexion entre le premier équipement d'utilisateur (110) et le second équipement d'utilisateur (120), dans lequel un système de radiocommunication (100) basé sur un multiplexage par répartition orthogonale de la fréquence comporte le noeud de réseau radio (140) et les premier et second équipements d'utilisateur (110, 120), dans lequel le procédé comporte les étapes ci-dessous consistant à :
recevoir (230) un signal de synchronisation en provenance du premier équipement d'utilisateur (120) ; et
décoder (250) des informations concernant ledit au moins un des premier et second états de connexion à partir du signal de synchronisation reçu.

8. Procédé selon la revendication 7, dans lequel le premier état de connexion comporte :
- un premier état indicatif du fait que le premier équipement d'utilisateur (110) est au repos relativement au noeud de réseau radio (140) ;
- un deuxième état indicatif du fait que le premier équipement d'utilisateur (110) est connecté relativement au noeud de réseau radio (140) ; ou
- un troisième état indicatif du fait que le premier équipement d'utilisateur (110) est connecté relativement au noeud de réseau radio (140) et est apte à agir en qualité de dispositif hôte ; et/ou
dans lequel le second état de connexion comporte :
- un quatrième état indicatif du fait que le premier équipement d'utilisateur (110) effectue une recherche relativement au second équipement d'utilisateur (120) ;
- un cinquième état indicatif du fait que le premier équipement d'utilisateur (110) émet une invitation relativement au second équipement d'utilisateur (120) ; ou
- un sixième état indicatif du fait que le premier équipement d'utilisateur (110) est connecté relativement au second équipement d'utilisateur (120).

9. Procédé selon la revendication 7 ou 8, dans lequel les informations obtenues en décodant le signal de synchronisation sont indicatives de l'un des premier, deuxième et troisième états et/ou sont indicatives de l'un des quatrième, cinquième et sixième états.

10. Procédé selon la revendication 8 ou 9, dans lequel les informations obtenues en décodant le signal de synchronisation indiquent qu'au moins l'un des premier et second états de connexion a été modifié, le procédé comprenant en outre les étapes ci-dessous consistant à :
recevoir (240), en provenance du premier équipement d'utilisateur (110), un bloc d'informations principal comprenant des informations indicatives de l'un des premier, deuxième et troisième états et/ou indicatives de l'un des quatrième, cinquième et sixième états ; et/ou
recevoir (240), en provenance du premier équipement d'utilisateur (110), un bloc d'informations système comprenant des informations indicatives de l'un des premier, deuxième et troisième états et/ou indicatives de l'un des quatrième, cinquième et sixième états.

11. Procédé selon l'une quelconque des revendications 7 à 10, dans lequel le signal de synchronisation comporte un signal de synchronisation primaire et/ou un signal de synchronisation secondaire.

12. Second équipement d'utilisateur (120) configuré de manière à obtenir des informations concernant au moins l'un parmi un premier état de connexion et un second état de connexion, le premier état de connexion étant connexe à une première connexion entre un premier équipement d'utilisateur (110) et un noeud de réseau radio (140), le second état de connexion étant connexe à une seconde connexion entre le premier équipement d'utilisateur (110) et le second équipement d'utilisateur (120), dans lequel un système de radiocommunication (100) basé sur un multiplexage par répartition orthogonale de la fréquence comporte le noeud de réseau radio (140) et les premier et second équipements d'utilisateur (110, 120), dans lequel le second équipement d'utilisateur (120) comporte :
un récepteur (710) configuré de manière à recevoir un signal de synchronisation en provenance du premier équipement d'utilisateur (120) ; et
un circuit de traitement (720) configuré de manière à décoder des informations concernant ledit au moins un des premier et second états de connexion à partir du signal de synchronisation reçu.
